(19) **Europäisches Patentamt / European Patent Office / Office européen des brevets**

(11) **EP 4 644 863 A1**

(12) **EUROPEAN PATENT APPLICATION**

(43) Date of publication:
05.11.2025 Bulletin 2025/45

(21) Application number: 24173001.9

(22) Date of filing: 29.04.2024

(51) International Patent Classification (IPC):
*G01N 15/1434* (2024.01)  *G01N 15/14* (2024.01)
*G01N 15/0205* (2024.01)  *G01N 15/10* (2024.01)

(52) Cooperative Patent Classification (CPC):
**G01N 15/1436; B01L 3/502715; G01N 15/0205;
G01N 15/1459;** G01N 2015/1006; G01N 2015/1486;
G01N 2015/1493

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: Imec VZW
3001 Leuven (BE)

(72) Inventors:
- **YURTSEVER, Gunay**
  **3511 Hasselt (BE)**
- **ZINOVIEV, Kirill**
  **3053 Haasrode (BE)**
- **VERELLEN, Niels**
  **3001 Heverlee (BE)**

(74) Representative: AWA Sweden AB
Box 5117
200 71 Malmö (SE)

(54) **A LIGHT ILLUMINATION AND COLLECTION DEVICE AND A METHOD FOR LIGHT ILLUMINATION AND COLLECTION**

(57)   A light illumination and collection device (100; 200) for a micro-fluidic system comprises: a flow channel (110; 210) configured to extend in a first plane and allow flow of a sample through the flow channel (110; 210), a light source (120; 220) configured to transmit illumination light along an optical axis extending through a cross-sectional plane of the flow channel (110; 210) for causing light interaction between the illumination light and the sample to form sample information carrying light; a light collecting waveguide (130; 230) configured to extend in a second plane parallel to the first plane, wherein the light collecting waveguide comprises a light inlet (132; 232) configured to receive the sample information carrying light, wherein the light inlet (132; 232) and the light collecting waveguide (130; 232) are rotated in relation to a projection of a normal of the cross-sectional plane onto the second plane.

Fig. 2

EP 4 644 863 A1

## Description

Technical field

The present description relates to a light illumination and collection device for a micro-fluidic system, and more specifically to sample detection using illumination light in a micro-fluidic system.

Background

Micro-fluidics has found multi-disciplinary application involving biotechnology, biochemistry, engineering, physics and more. Micro-fluidics is practically used in a wide variety of applications ranging from inkjet printer head development and micro-propulsion to medical cell analysis. In such application optical diagnostics is typically employed for detecting, analyzing and sorting particles, droplets or cells.

One specific example from the field of biotechnology is cytometry, and in particular flow cytometry. Flow cytometry is a powerful tool massively employed in various disciplines like immunology, molecular biology, cancer biology and other. Flow cytometry provides rapid analysis of cells or particles as they flow past single or multiple lasers while suspended in saline solution. Each particle can for instance be analysed for scattered light.

Flow cytometry in an integrated and compact device, such as on a chip, is being developed to increase throughput (number of processed cells per unit time) and decrease complexity and cost of the hardware.

In flow cytometer systems on chip, integrated optics may be employed for illumination and collection of light. Illumination components may involve diffraction gratings. In typical configuration, light is coupled into a waveguide on chip and propagates to the diffraction grating.

However, illumination beams created with integrated optics may suffer from challenges in design and imperfections of fabrication. It is challenging to create a perfectly directed illumination with low divergence using integrated optics such that noise may be introduced.

It is desired to provide a detection of light from a sample in order to provide a high signal-to-noise ratio.

Summary

An objective of the present description is to provide light illumination and collection for a micro-fluidic system, the light illumination and collection being provided in a compact arrangement while providing a high signal-to-noise ratio of collected light.

These and other objectives are at least partly met by the invention as defined in the independent claims. Preferred embodiments are set out in the dependent claims.

According to a first aspect, there is provided a light illumination and collection device for a micro-fluidic system, said light illumination and collection device comprising: a flow channel configured to extend in a first plane and allow flow of a sample through the flow channel, a light source configured to transmit illumination light along an optical axis extending through a cross-sectional plane of the flow channel for causing light interaction between the illumination light and the sample to form sample information carrying light; a light collecting waveguide configured to extend in a second plane parallel to the first plane, wherein the light collecting waveguide comprises a light inlet, wherein the light inlet is configured to receive the sample information carrying light, wherein the light inlet and the light collecting waveguide are rotated in relation to a projection of a normal of the cross-sectional plane of the flow channel onto the second plane.

It is an insight of the present description that using a diffraction grating for output of an illumination beam, the illumination beam may have quasi-exponential intensity distribution in a main lobe propagating almost perpendicular to the flow, and low power light in side lobes, propagating into larger angles. Intensity of light emitted to larger angles is low and quickly degrades with the angle. Intensity at angles of 40 - 60° can be orders of magnitude lower than intensity in the main lobe, yet the intensity is not negligible, and may be comparable to the intensity of light scattered by a particle.

Thus, background light may be coupled to receivers for collecting light from the sample creating background signal and background noise, which may limit sensitivity of sample detection.

According to the device of the first aspect, the light source may be configured to emit light in a beam propagating in the cross-sectional plane of the flow channel. For instance, the illumination light may form a planar light sheet in the cross-section of the flow channel. Even if light is provided in side lobes, such illumination light may still propagate in the cross-sectional plane or close to the cross-sectional plane of the flow channel. This implies that a projection of a wave vector of the illumination light incident on the second plane may exclusively extend in the direction perpendicular to the cross-sectional plane of the flow channel.

The sample information carrying light which has interacted with the sample will however not be limited to a particular angular direction. Rather, light interacting with the sample will be output into all angles.

Therefore, thanks to the light inlet and the light collecting waveguide of the device being rotated in relation to the projection of the normal of the cross-sectional plane onto the second plane, the light collecting waveguide may be configured to collect sample information carrying light while illumination light is not collected. Hence, the sample information carrying light may be collected with a high signal-to-noise ratio, since collection of background noise from the illumination light may be avoided.

The sample information carrying light provides information relating to the sample flowing in the flow channel. Thus, the light illumination and collection device may be used for gathering information about a sample in an interrogation point in the flow channel. This provides a convenient manner of gathering sample information. The micro-fluidic system may be provided with a plurality of interrogation points, each being provided with a light illumination and collection device, allowing changes to the sample in the flow channel may be followed through the micro-fluidic system.

By the term "micro-fluidic system" is here meant any fluid flow system comprising at least one flow channel with dimensions in the range from tens to hundreds of micrometers. A plurality of flow channels may be interconnected into a network through which a fluid may flow. By way of example, the micro-fluidic system may process the fluid in a variety of ways, such as transporting, mixing or separating the fluid. Given as non-limiting examples, a micro-fluidic system may be a flow cytometer, a droplet sorter or a cell sorter. The flow channel of the micro-fluidic system may have transparent wall(s) through which optical diagnostics of the flow in the flow channel may be performed. By way of example, the at least one transparent side may be made of, but is not limited to, standard glass, BK7, quartz, or any other transparent solid material. Alternatively, the flow channel may have non-transparent walls. It is conceivable that one or more waveguides may be provided on one or more inner walls of the flow channel, providing optical access to and from the flow channel, hence allowing to guide light in and out of the flow channel.

The sample flowing through the flow channel may interact with the illumination light. For instance, the sample may comprise particles and/or droplets which may interact with illumination light for forming sample information carrying light.

By the term "light source" is here meant any unit, device and/or element providing illumination light. The light source may not necessarily generate light but may rather be arranged to output light that is generated by another unit. Thus, light may be generated by a light generating unit and be transported to the light source for output of the illumination light into the flow channel by the light source. However, the light source may also be generating the light. By way of example, the light may be generated by a laser, a light emitting diode, an incandescent light source, a fluorescent light source, or a combination thereof.

In this context the term "light" should be allowed a wide interpretation, not limited to visible electromagnetic radiation but may also include for example ultraviolet light and infra-red light.

By the term "waveguide" is here meant any unit, device and/or element within which light may be guided, and within which transmission is restricted to a single direction, thereby providing transmission with low loss. By way of example, light may be reflected on inner walls of the waveguide by total internal reflection or by means of a reflective coating provided on the walls of the waveguide. Given as non-limiting examples, the waveguide may be a transparent dielectric waveguide or an optical fiber.

By the term "light interaction" is here meant any interaction between illumination light and the sample in the flow channel that may provide information about the sample. As an example, the light interaction may be through elastic scattering of light, such that illumination light goes through a light scattering process in which the direction of light may change but the energy of the photons, and thus the wavelength of the light is substantially unchanged, apart from a slight Doppler shift that may result from the movement of the sample. In other words, the scattering process does not involve any net energy transfer between the light and the scattering sample, in terms of e.g. change in electronic energy states of the atoms or molecules in the sample. Given as non-limiting examples, the elastic scattering may be, but is not limited to, Rayleigh, Thomson, Debye or Mie scattering. As another example, the light interaction may be through inelastic scattering of light, such that the direction of light may change and also energy of the photons changes, and hence the wavelength of light is changed. Given as non-limiting examples, the inelastic scattering may be, but is not limited to, Raman scattering, such as Stokes Raman scattering or anti-Stokes Raman scattering. As yet another example, the light interaction may be through absorption of the light by the sample and later emission of light from the sample. The emitted light from the sample may thus change wavelength. Given as non-limiting examples, such absorption and emission of light may be, but is not limited to, fluorescence or phosphorescence.

The light inlet of the light collecting waveguide may be arranged in or close to a projection of the cross-sectional plane onto the second plane. This implies that the light collecting waveguide may be configured to collect light that has slightly changed direction in the light interaction with the sample. This may be used for instance for collecting forward-scattered light.

However, the light inlet of the light collecting waveguide may be laterally displaced in the second plane from a projection of the cross-sectional plane onto the second plane. This implies that the light collecting waveguide may be configured to collect light that has made a relatively large change in direction in the light interaction with the sample. This may be used for instance for collecting side-scattered light.

The light inlet may form a portion of the waveguide which is configured in a manner such that light may be coupled into the waveguide. Thus, the light collecting waveguide may have a portion in which light is coupled into the waveguide forming the light inlet. The light collecting waveguide may further comprise a light guiding element extending in the second plane from the light inlet. The light inlet and at least a portion of the light guiding element at the light inlet may be rotated for facilitating collecting sample information carrying light with a high signal-to-noise ratio.

The illumination light may be transmitted along an optical axis. The optical axis may form a center axis of the illumination light. The illumination light may for instance form a beam of light extending through a portion of a cross-section of the flow channel. However, according to an embodiment, the light source may be configured to transmit illumination light that illuminates an entire cross-sectional plane of the flow channel.

The illumination light may form a planar light sheet. Light in the planar light sheet may mainly propagate in a direction parallel to the optical axis. The rotated arrangement of the light inlet and light collecting waveguide in the second plane may be particularly efficient in avoiding collection of background noise from illumination light that is configured to be provided in a plane of the flow channel, such as being provided as a planar light sheet.

The cross-sectional plane of the flow channel may be perpendicular to flow through the flow channel. However, the cross-sectional plane may be at least slightly tilted in a vertical and/or horizontal direction to the flow through the flow channel.

Further, it should be understood that the light illumination and collection device may be implemented by means of photonic integrated circuits (PICs). This is particularly suitable for forming a compact device.

According to an embodiment, the light source is configured to transmit illumination light causing scattering of light by the sample for forming scattered light carrying sample information.

Thus, the light illumination and collection device may be configured for gathering sample information through scattering of light. The light collecting waveguide may thus be configured to collect scattered light. The sample information carrying light may thus be scattered light.

This may be a convenient manner of gathering sample information, requiring no preparation of the sample for enabling sample information to be gathered. For instance, sample information relating to size of particles and/or granularity of particles may be acquired by gathering scattered light.

According to an embodiment, the light inlet is arranged in relation to the cross-sectional plane of the flow channel for collecting side-scattered light being scattered out of the cross-sectional plane of the flow channel, wherein the light collecting waveguide forms a side-scattered light collecting waveguide.

By the term "side-scattered light" is here meant scattered light that has a scattering angle, with respect to the optical axis of the illumination light, that is larger than 10° but not larger than 85°. More preferably, side-scattered light is light having a scattering angle in the range of 15° to 80°, such as in a range of 30° to 75°.

It should be realized that side-scattered light collecting waveguide may thus be displaced from a projection of the cross-sectional plane onto the second plane in order to capture the light being scattered away from the propagation direction of the illumination light along the optical axis. This implies that a major portion of illumination light that does not interact with the sample will also not reach the light collecting waveguide.

However, intensity of side-scattered light may be very low compared to intensity of the illumination light. This implies that even if a small portion of the illumination light, such as in a side lobe of the illumination light, reaches the light collecting waveguide, the signal-to-noise ratio of the collected side-scattered light may be severely affected.

Hence, the rotated arrangement of the light inlet and light collecting waveguide in the second plane may be particularly advantageous for collection of side-scattered light, since intensity of the side-scattered light is low and therefore detection of side-scattered light is sensitive to noise.

The sample information carrying light may thus be side-scattered light and the side-scattered light collecting waveguide may be configured to collect sample information carrying light in form of side-scattered light.

According to an embodiment, the light illumination and collection device may further comprise a forward-scattered light collecting waveguide, wherein the forward-scattered light collecting waveguide comprises a light inlet, wherein the light inlet is configured to receive forward-scattered light being scattered in a direction in relation to the optical axis being smaller than 10°.

By the term "forward-scattered light" is here meant scattered light that has a scattering angle, with respect to the optical axis of the illumination light, that is larger or equal to 0° but not larger than 10°. More preferably, forward-scattered light is light having a scattering angle in the range of 0.5° to 5°.

The forward-scattered light collecting waveguide may be rotated in relation to a projection of a normal of the cross-sectional plane of the flow channel onto the second plane. Thus, a forward-scattered light collecting waveguide may be arranged in the second plane in order to avoid or reduce an amount of illumination light passing through the flow channel without being subject to light interaction with the sample being coupled into the forward-scattered light collecting waveguide.

In fact, the light illumination and collection device may be configured to only collect forward-scattered light with the light collecting waveguide having a rotated arrangement in the second plane forming a forward-scattered light collecting waveguide. Thus, the forward-scattered light collecting waveguide may not necessarily be used in combination with a side-scattered light collecting waveguide.

However, use of both a forward-scattered light collecting waveguide and a side-scattered light collecting waveguide may be advantageous in that the sample information gathered from forward-scattered light and from side-scattered light may provide complementary information of the sample.

According to an embodiment, the forward-scattered light collecting waveguide is configured to extend in the second plane and wherein the forward-scattered light collecting waveguide is rotated in relation to the side-scattered light collecting waveguide.

This implies that parasitic coupling from a light inlet of the forward-scattered light collecting waveguide to the light inlet of the side-scattered light collecting waveguide may be avoided, since wave vectors of light propagating at the inlets of the forward-scattered light collecting waveguide and the side-scattered light collecting waveguide, respectively, are not parallel.

Thus, forward-scattered light as well as side-scattered light may be collected while having a high signal-to-noise ratio of the collected side-scattered light.

The forward-scattered light collecting waveguide may even be configured to allow light having passed through the flow channel without being subject to light interaction with the sample to be collected by the forward-scattered light collecting waveguide, such that the forward-scattered light collecting waveguide may be configured to collect forward-scattered light and light which is not affected by the sample. The forward-scattered light collecting waveguide may thus be configured to collect a decreased intensity of light when a particle or droplet in the sample is present in the cross-sectional plane of the flow channel compared to an intensity of light detected when no particles or droplets are present in the flow though the cross-sectional plane of the flow channel.

According to another embodiment, the forward-scattered light collecting waveguide and the side-scattered light collecting waveguide are arranged in different layers, such as being separated by at least 1 $\mu$m, such as by at least 10 $\mu$m, such as by at least 50 $\mu$m, such as by at least 100 $\mu$m. This may further reduce cross-talk from the light inlet of the forward-scattered light collecting waveguide to the light inlet of the side-scattered light collecting waveguide.

According to an embodiment, the light source is configured to transmit illumination light causing fluorescence by the sample for forming fluorescence light carrying sample information.

Thus, the light illumination and collection device may be configured for gathering sample information though fluorescence. The light collecting waveguide may thus be configured to collect fluorescence light. The sample information carrying light may thus be fluorescence light.

This may be a useful manner of gathering sample information of particular particles of interest. For instance, particles of interest may be tagged with a fluorescent marker, such that detection of fluorescence light may be used for identifying the particles of interest.

Intensity of side-scattered light may be low compared to intensity of the illumination light. This implies that even if a small portion of the illumination light, such as in a side lobe of the illumination light, reaches the light collecting waveguide, the signal-to-noise ratio of the collected fluorescence light may be severely affected.

Hence, the rotated arrangement of the light inlet and light collecting waveguide in the second plane may be particularly advantageous for collection of fluorescence light, detection of fluorescence light is sensitive to noise.

According to an embodiment, the light illumination and collection device further comprises a filter configured to block the illumination light from being collected by the light collecting waveguide.

Thus, where fluorescence light is collected, background noise from illumination light may also be reduced or prevented using a filter. This may be a simple manner of reducing or preventing background noise, since the illumination light and the fluorescence light have different wavelengths. It should be realized that the filter may be configured to completely or partially block the illumination light.

The filter may be configured to block the illumination light from being collected by the light collecting waveguide. However, in an alternative embodiment, the light illumination and collection device further comprises a filter arranged in the light collecting waveguide for blocking illumination light from being propagated through the light collecting waveguide.

According to an embodiment, the light collecting waveguide forms part of a plurality of light collecting waveguides, wherein the light collecting waveguides in the plurality of light collecting waveguides extend in parallel to each other.

The plurality of light collecting waveguides may be adapted for collection of light from different positions in the flow channel. Thus, the light illumination and collection device may be adapted to collect sample information carrying light regardless whether a particle or droplet travels through a central or a peripheral part of the cross-sectional plane of the flow channel.

It should be realized that the light illumination and collection device may comprise two (or more) sets, each comprising a plurality of light collecting waveguides. The plurality of light collecting waveguides within a set may be parallel. However, light collecting waveguides of different sets may not be parallel. This may be helpful for providing a compact arrangement of the plurality of light collecting waveguides.

According to an embodiment, the light illumination and collection device further comprises a plurality of light detectors, wherein each of the light collecting waveguides is connected to a separate light detector of the plurality of light detectors for detecting light interaction from different positions in the cross-sectional plane of the flow channel.

Thus, light may be detected in such manner that it may allow determination of a location within the flow channel of the particle or droplet that has interacted with the illumination light.

However, it should be realized that the plurality of light collecting waveguides may all be connected to a common light detector. This may be used for providing collection of light from the entire cross-section of the flow channel, even though the actual location within the flow channel of the particle or droplet that has interacted with the illumination light may not be determined.

According to an embodiment, the light inlet of the light collecting waveguide is formed by a grating.

This is a suitable manner for providing light coupling into the light collecting waveguide. The grating be sensitive to a direction of a wave vector of the light in the second plane, such that the rotational arrangement of the light collecting waveguide may be efficient for preventing or reducing an amount of illumination light being coupled into the light collecting waveguide.

Given as non-limiting examples, the grating may be, but is not limited to, a linear grating, or a linear grating with apodization.

According to an embodiment, the light source comprises an illumination light propagating waveguide configured to extend in a third plane parallel to the first and second planes, wherein the illumination light propagation waveguide and the light collecting waveguide are arranged at opposite sides of the flow channel, wherein the illumination light propagating waveguide comprises an illumination grating configured to direct light propagating in the illumination light propagating waveguide out of the illumination light propagating waveguide and into the flow channel.

This is a convenient manner of providing light for transmitting illumination light into the flow channel. Thanks to the illumination light propagating waveguide being arranged in a plane parallel to the first and second planes, the illumination light propagating waveguide, the flow channel and the light collecting waveguide may be arranged in a stacked relation. This facilitates forming the light illumination and collection device as a compact device.

At the illumination grating, illumination light is redirected towards the flow channel. However, it should be realized that the redirection of illumination light may be achieved in many ways, such as by a reflective coating, a grating coupler, or any other means of redirecting light. After redirection of the illumination light, the illumination light propagates into the flow channel and illuminates any sample in its propagation path. The use of an illumination grating may be particularly suitable for forming a planar light sheet through the cross-sectional plane of the flow channel.

However, it should be realized that the illumination light propagating waveguide may be arranged in a different manner in relation to the first and second planes. Illumination light may be propagated in an illumination light propagation waveguide extending perpendicularly to the first and second planes.

According to an embodiment, the light inlet and the light collecting waveguide forms an angle in relation to the projection of the normal of the cross-sectional plane of the flow channel onto the second plane, wherein the angle is in a range of 20-90°, such as in a range of 20-70°, such as in a range of 30-60°, such as in a range of 40-50°.

These may be suitable angles for collecting sample information carrying light with a high signal-to-noise ratio.

According to a second aspect, there is provided a flow cytometer comprising at least one, preferably at least eight, light illumination and collection device according to the first aspect.

Effects and features of the second aspect are largely analogous to those described above in connection with the first aspect. Embodiments mentioned in relation to the second aspect are largely compatible with the first aspect.

The light illumination and collection device may be particularly suitable for use in a flow cytometer. This may facilitate providing a compact flow cytometer.

The flow cytometer may advantageously use a plurality of light illumination and collection devices. Thus, the flow cytometer may be configured to analyze a plurality of samples simultaneously using the plurality of light illumination and collection devices. Thus, the flow cytometer may be provided with a high throughput of samples.

The number of light illumination and collection devices may be at least 8, such as at least 10, such as at least 15, such as at least 100.

According to a third aspect, there is provided a method for light illumination and collection for a microfluidic system, said method comprising: transmitting illumination light along an optical axis extending through a cross-sectional plane of a flow channel for causing light interaction between the illumination light and a sample flowing in the flow channel to form sample information carrying light; collecting the sample information carrying light by a light collecting waveguide extending in parallel to the flow channel, wherein the light collecting waveguide comprises a light inlet configured to receive the sample information carrying light, wherein the light inlet and the light collecting waveguide are rotated in relation to a projection of a normal of the cross-sectional plane of the flow channel onto the second plane.

Effects and features of the third aspect are largely analogous to those described above in connection with the first and second aspects. Embodiments mentioned in relation to the third aspect are largely compatible with the first and second aspect.

The method allows collecting sample information carrying light with a high signal-to-noise ratio.

Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.

Fig. 1 is a cross-sectional view of a light illumination and collection device according to a first embodiment.

Fig. 2 is a perspective view of the light illumination and collection device according to the first embodiment.

Fig. 3 is a top view illustrating relation between a light inlet of a side-scattered light collecting waveguide and an illumination grating of the light illumination and collection device according to the first embodiment.

Fig. 4 is a top view illustrating relation between a light inlet of a side-scattered light collecting waveguide and a light inlet of a forward-scattered light collecting waveguide of the light illumination and collection device according to the first embodiment.

Figs 5-6 are cross-sectional views of two alternatives of a light illumination and collection device according to a second embodiment.

Fig. 7 is a flow chart of a method according to an embodiment.

Detailed description

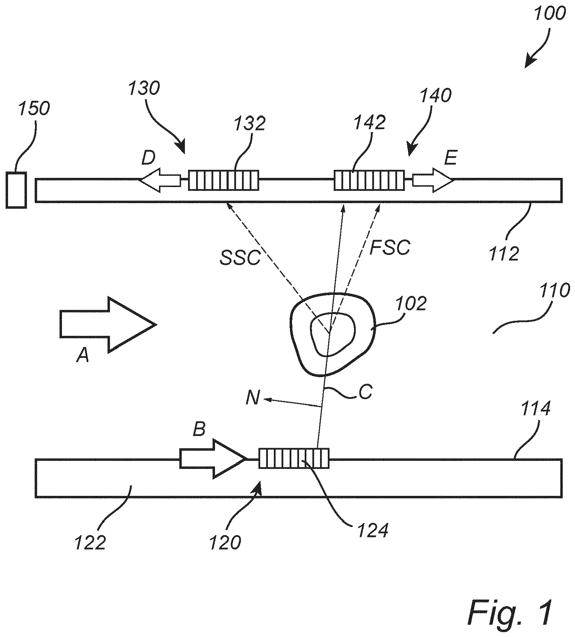

Referring to Fig. 1, a light illumination and collection device 100 according to an embodiment will be described. The light illumination and collection device 100 may be used for gathering information in a micro-fluidic system. As shown in Fig. 1, the light illumination and collection device 100 may be configured to transmit illumination light into a flow channel 110 and collect light that has interacted with a sample flowing through the flow channel 110.

The flow channel 110 may be part of or connected to the micro-fluidic system and may provide a micro-fluidic flow channel. The flow channel and the micro-fluidic system may be designed for use in various applications for providing optical diagnostics of a sample flowing through the flow channel.

The sample may be a liquid sample carrying particles for which sample information is to be gathered. Alternatively, the sample may be a gas sample carrying particles and/or droplets for which sample information is to be gathered.

In particular, the micro-fluidic system may be a flow cytometer. The micro-fluidic system may thus be configured to control a flow of the sample to transport cells one at a time through the flow channel 110. The light illumination and collection device 100 may thus be used for gathering sample information that may provide cell counting, determination of cell types that may be used for cell sorting, determination of cell characteristics and function, detection of biomarkers, etc.

The light illumination and collection device 100 may be formed in a compact arrangement, wherein the light illumination and collection device 100 is integrated on a substrate. For instance, the light illumination and collection device 100 may be formed as a photonic integrated circuit (PIC). Such compact arrangement of the light illumination and collection device 100 allows providing multiple parallel identical or similar light illumination and collection devices 100 on a common substrate or PIC enabling a high sample throughput in a flow cytometer. This is very important for enabling high throughput, for instance, for analysis of samples for cell therapy, wherein huge numbers of cells need to be analyzed in limited time.

Fig. 1 schematically illustrates a cross-section along a longitudinal extension of the flow channel 110. The flow channel 110 may be formed in a micro-fluidic layer of a compact, integrated device, such that the flow channel 110 extends in a first plane and provides a flow of a sample (indicated by arrow A) through the flow channel 110. A micro-fluidic system may be provided in the first plane, providing one or more channels in fluid connection with each other. The flow channel 110 may be defined by side walls in the layer and by a top wall 112 and a bottom wall 114 which may be formed by layers above and below the micro-fluidic layer.

The top wall 112 and the bottom wall 114 may be formed by transparent materials, at least in a position where optical diagnostics is to be performed, such that light is allowed to pass into and out of the flow channel 110. However, the top wall 112 and the bottom wall 114 may be formed by optical components for providing illumination light into the flow channel 110 and for collecting light from the flow channel 110, such that light enters directly into the flow channel from, e.g., the bottom wall 114, and is collected in the opposite wall, e.g., the top wall 112.

The light illumination and collection device 100 comprises a light source 120. As shown in Fig. 1, the light source 120 may comprise an illumination light propagating waveguide 122. The illumination light propagating waveguide 122 may extend in a third plane parallel to the first plane. The illumination light propagating waveguide 122 may form part of the bottom wall 114 of the flow channel 110 or may be arranged to extend close to or in contact with the bottom wall 114.

The illumination light propagating waveguide 122 may provide guiding of light by total internal reflection. The illumination light propagating waveguide 122 may thus provide guiding of light, as illustrated by arrow B) to a location in which optical diagnostics in the flow channel 110 is to be made. This implies that a light generating unit for generating the illumination light need not be arranged close to the flow channel 110, but may rather be arranged in a different location. In fact, the light generating unit may be an external part, which is not part of the light illumination and collection device 100 and may not even be integrated with the light illumination and collection device 100. Rather, the illumination light propagating waveguide 122 may receive light through an in-coupler which may be displaced in the third plane from the location in which optical diagnostics is made.

The illumination light propagating waveguide 122 may comprise an illumination grating 124 which is configured to re-direct light propagating in the waveguide out of the waveguide and into the flow channel 110. Thus, the illumination light may be transmitted into the flow channel 110 from the illumination grating 124.

It should be realized that the light source 120 may be configured in many other ways for transmitting illumination light into the flow channel 110. For instance, the light source 120 may be provided as a light generating unit which outputs illumination light directly into the flow channel 110. Alternatively, the illumination light propagation waveguide may be configured to extend in a different relation to the flow channel 110, for instance extending in a direction perpendicular to the extension of the flow channel 110. The illumination light propagation waveguide may then for instance be provided as an optical fiber with an end facet facing a wall, such as the bottom wall 114, of the flow channel 110.

The illumination light may be formed by laser light and may be generated by a laser source. However, the illumination light may alternatively be generated by a light emitting diode, an incandescent light source, a fluorescent light source, or a combination thereof. The illumination light may have a narrow, specific wavelength, but may alternatively comprise a range of wavelengths. The illumination light may be visible light, but may alternatively be in a different part of the electro-magnetic spectrum, such that the illumination light may be ultra-violet light or infra-red light.

The illumination light may be directed by the light source 120 such that the illumination light passes through a cross-section of the flow channel 110. The illumination light may be provided in a narrow cross-section along a direction of flow of the sample in the flow channel 110. However, the illumination light may form a planar sheet so as to provide illumination light along an entire cross-section between the side walls of the flow channel 110. This implies that sample information may be gathered regardless whether particles and/or droplets pass in a center of the flow channel 110 or close to a side wall. It should be realized that the illumination light may not necessarily form a sheet through the cross-section of the flow channel 110 but may rather be provided as a beam extending through, e.g., a central part of the flow channel 110 between the side walls.

The illumination light may be transmitted along an optical axis C such that the illumination light may be centered around the optical axis C. The illumination light may be arranged in a cross-sectional plane through the flow channel 110. The optical axis C extends in the cross-sectional plane. The illumination light may be provided in the entire cross-sectional plane in the flow channel 110 or may be provided in a part of the cross-sectional plane.

Using the illumination light propagating waveguide 122 with the illumination grating 124 for directing light into the flow channel 110, a planar light sheet may be easily formed, e.g., by the illumination grating 124 extending between the side walls of the flow channel 110.

The illumination light may be mainly propagating in parallel with the optical axis C.

The cross-sectional plane of the flow channel 110 may be perpendicular to the flow of the sample in the flow channel 110. However, it should be realized that the cross-sectional plane of the flow channel 110 may be tilted in a horizontal direction, that is tilted between the side walls of the flow channel 110, and/or in a vertical direction, that is tilted between the top wall 112 and the bottom wall 114 of the flow channel 110. In Fig. 1, a slight horizontal tilt of the cross-sectional plane is indicated.

It should be realized that illumination light may not be confined completely to the cross-sectional plane. Rather, illumination light, with relatively weak intensity, may for instance be provided in side lobes.

The illumination light is configured to cause light interaction between the illumination light and the sample. In particular, the illumination light may be configured to cause light interaction between the illumination light and a particle 102 and/or a droplet in the sample. The light interaction provides information of the sample and light formed by the light interaction is referred to herein as sample information carrying light.

The light source 120 may be configured to transmit illumination light causing scattering of light by the sample for forming scattered light carrying sample information light as illustrated in Fig. 1.

The light illumination and collection device 100 further comprises a light collecting waveguide 130 configured to collect sample information carrying light. The light collecting waveguide 130 may be arranged in a location for collecting light scattered into a particular direction. As shown in Fig. 1, the light collecting waveguide 130 may be arranged in relation to the cross-sectional plane in the flow channel 110 such that light being scattered out of the cross-sectional plane is collected. Thus, the light collecting waveguide 130 may be configured to collect side-scattered light (SSC) forming a SSC collecting waveguide 130.

The SSC collecting waveguide 130 is arranged for collecting side-scattered light. A location of a light inlet 132 of the SSC collecting waveguide 130 in relation to the cross-sectional plane in which illumination light is provided determines an angular direction of light that will be collected by the SSC collecting waveguide 130. Thus, the light inlet 132 of the SSC collecting waveguide 130 may need to be placed in dependence of the angular direction of light that is desired to be collected.

The scattered light has an angular direction defined by a scattering angle formed by the side-scattered light with respect to the optical axis C of the illumination light. The SSC collecting waveguide 130 may be arranged such that the scattering angle of collected light is larger than 10° but not larger than 85°. More preferably, side-scattered light is light having a scattering angle in the range of 15° to 80°, such as in a range of 35° to 75°.

The SSC collecting waveguide 130 may extend in a second plane parallel to the first plane. The SSC collecting waveguide 130 may form part of the top wall 112 of the flow channel 110 or may be arranged to extend close to or in contact with the top wall 112.

The SSC collecting waveguide 130 may provide guiding of light by total internal reflection. The SSC collecting waveguide 130 may thus provide guiding of light, as illustrated by arrow D) to a location in which the collected light may be sensed. Thus, the SSC collecting waveguide 130 may guide the collected light to a light detector 150. This implies that a light detector for detecting collected light need not be arranged close to the flow channel 110, but may rather be arranged in a different location. In fact, the light detector 150 may be an external part, which is not part of the light illumination and collection device 100 and may not even be integrated with the light illumination and collection device 100. Rather, the SSC collecting waveguide 130 may output light through an out-coupler which may be displaced in the second plane from the location at which light is collected.

The light inlet 132 may be formed by a grating which is configured to receive light and couple light into the waveguide for propagation therein. The grating may be formed, for instance, as a linear grating or a linear grating with apodization.

In addition, the light illumination and collection device 100 may further comprise a forward-scattered light (FSC) collecting waveguide 140. The FSC collecting waveguide 140 is arranged for collecting forward-scattered light. Thus, a light inlet 142 of the FSC collecting waveguide 140 may be placed to receive forward-scattered light. such that light scattered in a forward direction.

The forward-scattered light has an angular direction defined by a scattering angle formed by the forward-scattered light with respect to the optical axis C of the illumination light. The FSC collecting waveguide 140 may be arranged such that the scattering angle of collected light is larger or equal to 0° but not larger than 10°. More preferably, forward-scattered light is light having a scattering angle in the range of 0.5° to 5°.

The FSC collecting waveguide 140 may be placed to collect light that coincides with the optical axis C of the illumination light. This collection of light corresponds to collecting light propagating unaffected along the optical axis C of the illumination light through the flow channel 110. Also, forward-scattered light being scattered into the direction of the optical axis C is collected. However, an intensity of the collected light may be dominated by light propagating unaffected through the flow channel 110. This may be referred to as collecting in axial light-loss (ALL) mode. ALL relies on collecting light remaining in illumination light during light interaction with a particle or droplet. Thus, using collection of light in ALL mode, intensity of the collected light decreases when illumination light interacts with the sample.

However, according to another embodiment, the FSC light collecting waveguide 140 is offset from the optical axis C such that light that has been scattered by the particle and/or droplet is collected is a dominant portion of the collected light. The FSC light collecting waveguide 140 may in such case be arranged to collect forward-scattered light having a scattering angle larger than 0° but not larger than 10°, such as in the range of 0.5° to 5°.

The FSC collecting waveguide 140 may also extend in the second plane. The FSC collecting waveguide 140 may form part of the top wall 112 of the flow channel 110 or may be arranged to extend close to or in contact with the top wall 112.

The FSC collecting waveguide 140 may provide guiding of light by total internal reflection. The FSC collecting waveguide 140 may thus provide guiding of light, as illustrated by arrow E) to a location in which the collected light may be sensed.

The light illumination and collection device 100 may thus be configured to collect both side-scattered light and forward-scattered light. This provides collection of sample information that allows analysis of particles and/or droplets in the sample. It should however be realized that the illumination and collection device 100 may be configured to collect only side-scattered light or only forward-scattered light.

The light collecting waveguides 130, 140 may receive background noise. In particular, the sample information carrying light collected by the SSC collecting waveguide 130 may be sensitive to noise, since intensity of the side-scattered light may be low. The light collecting waveguides 130, 140, and in particular, the SSC collecting waveguide 130 may therefore be arranged so as to avoid or reduce collection of background noise from the illumination light.

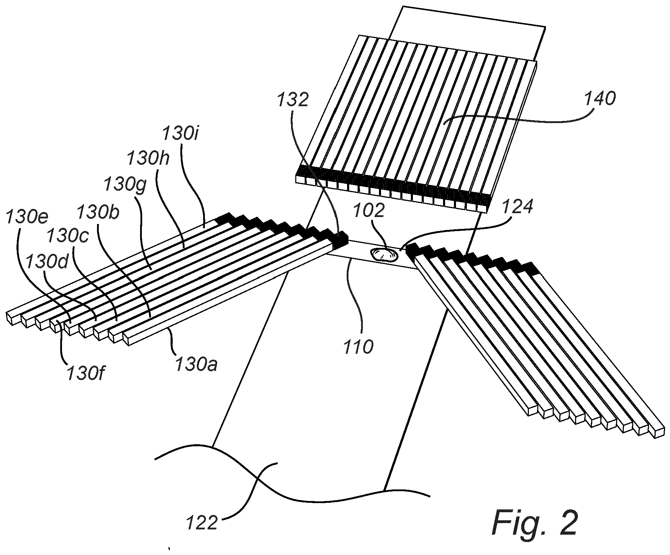

As illustrated in Fig. 2, the SSC collecting waveguide 130 may arranged so as not to extend along a direction of the flow channel 110. The SSC collecting waveguide 130 may be configured to extend in a direction that is rotated, or makes an angle, in relation to an extension of the flow channel 110. This arrangement of the SSC collecting waveguide 130 provides a reduced amount of background noise based on the illumination light in the SSC collecting waveguide 130.

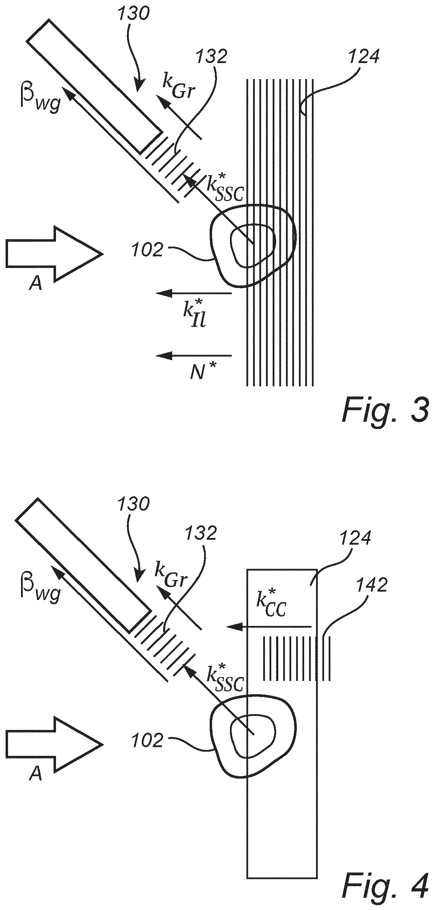

In Fig. 3, a top view of the SSC collecting waveguide 130 in relation to the illumination grating 124 and illumination light output therefrom is illustrated. As described above, the illumination light is transmitted along the optical axis C extending through a cross-sectional plane of the flow channel 110. The illumination light is propagated mostly in the cross-sectional plane or parallel to the cross-sectional plane. This applies also to stray illumination light forming background noise.

The light inlet 132 may be configured to collect light incident on the light inlet in relation to a particular direction in the second plane. For efficiently coupling light into a waveguide using a diffraction grating, an index matching condition should be satisfied, i.e.

$$\beta_m = k_0 \left( \sin(\theta_m) + m\frac{\lambda}{\Lambda} \right),$$

where $\beta_m$ is a propagation constant of the waveguide, $k_0$ is a wave vector of incident light, $\theta_m$ is an angle of incidence of light, $\lambda$ is a wavelength of light, A is a grating period, m is a diffraction order and $k_0\lambda/\Lambda$ is a grating vector (illustrated as $k_{Gr}$ in Fig. 3).

Light is scattered by the particle or droplet in the flow channel 110 into all directions. This implies that there will be an angle incidence $\theta$ of the side-scatted light at which a wave vector $k^*_{SSC}$ of the scattered light satisfies the phase matching condition. The vector $k^*_{SSC}$ of the scattered light in the second plane may be defined by the projection of the wave vector $k_{SSC}$ of the scattered light after scattering by the particle or droplet onto the second plane, based on the angle of incidence $\theta$ of the scattered light onto the second plane,

$$k^*_{SSC} = k_{SSC} \sin\theta.$$

A wave vector of the illumination light which has not interacted with the sample in the flow channel will extend in the second plane along a projection N* of a normal (illustrated as N in Fig. 1) of the cross-sectional plane onto the second plane. The wave vector $k^*_{il}$ of the illumination light in the second plane may be defined by the projection of the wave vector $k_{il}$ of the illumination light (for instance output by the illumination grating 124) onto the second plane, based on the angle of incidence $\theta$ of illumination light,

$$k^*_{il} = k_{il} \sin\theta.$$

The light inlet 132 of the SSC collecting waveguide 130 may be arranged in the second plane with a rotation to a projection of the normal of the cross-sectional plane formed by illumination light in the flow channel 110. Using a grating as the light inlet 132, grooves of the grating may be oriented perpendicular to an extension of the waveguide. This implies that the grating vector $k_{Gr}$ extends along the direction of the waveguide. As seen in Fig. 3, the grooves of the grating of the light inlet 132 may thus be rotated in relation to the grooves of the illumination grating 124.

The arrangement of the light inlet of the SSC collecting waveguide 130 implies that the wave vector $k^*_{il}$ of the illumination light in the second plane is not parallel to the grating vector $k_{Gr}$. Thus, phase matching condition for the illumination light will not be satisfied for the same angle of incidence $\theta$ of the illumination light as for the scattered light.

This implies that the illumination light will not meet the phase matching condition and will therefore not be collected by the light inlet 132 of the light collecting waveguide 130 ensuring that background noise in the light collecting waveguide 130 is reduced.

In Fig. 4, a top view similar to Fig. 3 is shown but also including the FSC collecting waveguide 140. As illustrated in Fig. 4, wherein the FSC collecting waveguide 140 is rotated in relation to the SSC collecting waveguide 130. In particular, the light inlet 132, such as a grating, of the SSC collecting waveguide 130 may be rotated in relation to the light inlet 142 of the FSC collecting waveguide 140.

As shown in Fig. 4, the light inlet 142 of the FSC collecting waveguide 140 need not be rotated in relation to the projection of the normal of the cross-sectional plane of the flow channel 110 onto the second plane. This may be used in particular if the FSC collecting waveguide 140 is used for collecting light in the ALL mode. However, the light inlet of the FSC collecting waveguide 140 may also be rotated in relation to the projection of the normal of the cross-sectional plane of the flow channel 110 onto the second plane, preferably at another angle than the light inlet of the SSC collecting waveguide 140.

Rotation of the grating of the SSC collection waveguide 130 also helps to reduce parasitic cross-coupling from the grating of the FSC collecting waveguide 140, because in-plane propagation vectors, $k^*_{cc}$ of light coming from the FSC grating and the propagation constant $\beta_{wg}$ of light propagating in the SSC collection waveguide 130, are not parallel.

The light inlet 132 of the SSC collecting waveguide 130 thus forms an angle in relation to the projection of the normal of the cross-sectional plane of the flow channel onto the second plane. The angle may be in a range of 20-90°, such as in a range of 20-70°, such as in a range of 30-60°, such as in a range of 40-50°.

As illustrated in Fig. 2, a plurality of light collecting waveguides may be provided. For instance, both a plurality of SSC collecting waveguides 130a-i and a plurality of FSC collecting waveguides may be provided. The plurality of light collecting waveguides may be configured to extend in parallel to each other, such that the light collecting waveguides have a common rotated arrangement in the second plane in relation to the projection of the normal of the cross-sectional plane of the flow channel 110 onto the second plane.

The SSC collecting waveguides 130a-i may be adapted to collect light from different locations in the cross-sectional plane of the flow channel 110. As seen in Fig. 2, the light inlets of the plurality of light collecting waveguides 130a-i may be arranged in a line that is perpendicular to an extension of the flow channel 110. Thus, regardless of a location in relation to a side wall of the flow channel of a particle or droplet, scattered light from the particle or droplet may be collected.

As shown in Fig. 2, the SSC collecting waveguides may be arranged in two sets, wherein the light collecting waveguides in each set are parallel with each other. However, the light collecting waveguides in different sets may extend into different directions, so that the light collecting waveguides may form a V-shaped configuration in the second plane. This may be suitable for a compact arrangement of the SSC collecting waveguides while providing collection of light from the entire cross-section of the flow channel 110.

The light collected in the SSC collecting waveguides 130a-i may be transported to a common light detector. The light detector may thus be configured to detect side-scattered light without discriminating between different locations of origin of the side-scattered light.

However, each of the SSC collecting waveguides 130a-i may be connected to a separate light detector. This implies that different light detectors may detect light from light interaction from different positions in the cross-sectional plane of the flow channel. This may be used for determining a location in the cross-sectional plane of the particle or droplet.

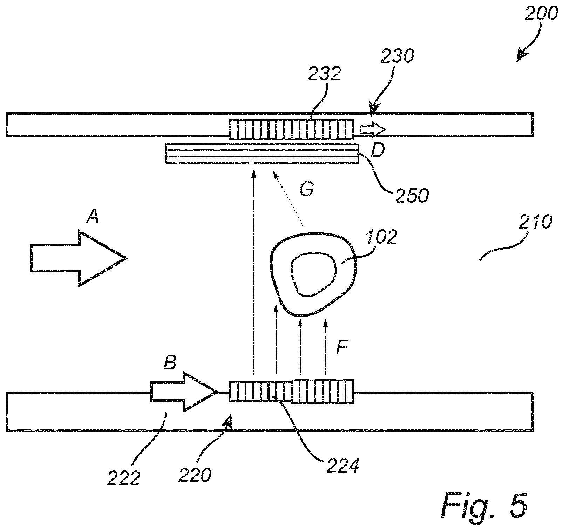

Referring now to Figs 5-6, a light illumination and collection device 200 according to another embodiment will be described. The light illumination and collection device 200 may be configured to collect fluorescence light from the sample instead of scattered light being detected in the above-described embodiment.

The light illumination and collection device 200 may be similar to the light illumination and collection device 100 and, for brevity, only differences to the above-described embodiment will be discussed.

The light illumination and collection device 200 comprises a light source 220 configured to transmit illumination light causing fluorescence by the sample. The light source 220 may thus be configured to transmit illumination light (illustrated by arrows F) of a particular wavelength adapted to causing fluorescence by the sample. Like the light illumination and collection device 100 of the above-described embodiment, the light source 220 may comprise an illumination light propagating waveguide 222 for guiding light (illustrated by arrow B) and an illumination grating 224 for output of light into the flow channel 210. However, the light source 220 may be provided in alternative manners as well.

The illumination light may be transmitted mainly in a cross-sectional plane of the flow channel 210 along an optical axis extending through the cross-sectional plane.

The light interaction of the illumination light with the sample may cause fluorescence light (illustrated by arrow G) to be output forming sample information carrying light. The light illumination and collection device 200 may further comprise a light collection waveguide 230 for collecting the fluorescence light arranged in a second plane. The light collection waveguide 230 may be arranged in or close to a projection of the cross-sectional plane onto the second plane. However, the light collection waveguide 230 may also be displaced from the projection of the cross-sectional plane onto the second plane.

The light inlet 232 of the light collection waveguide 230 is rotated in relation to a projection of a normal of the cross-sectional plane of the flow channel 210 onto the second plane. This implies that background noise from the illumination light may be avoided.

The light collecting waveguide 230 may provide guiding of light, as illustrated by arrow D) to a location in which the collected light may be sensed.

In addition, the light illumination and collection device 200 may comprise a filter for filtering out illumination light. Since fluorescence is detected, a wavelength of the fluorescence light is different from the illumination light. This may be used for filtering out the illumination light and thus further reduce background noise from the illumination light in the collected light.

As illustrated in Fig. 5, the filter 250 may be provided as a fluorescence filter arranged in front of the light collecting waveguide 230. For instance, the filter 250 may be provided on a wall of the flow channel 210 in front of the light inlet 232 of the light collecting waveguide 230. The filter 250 may be provided as a thin-film filter being sensitive to wavelength such that the filter 250 will pass fluorescence light while completely or partially blocking illumination light from being collected by the light collecting waveguide 230.

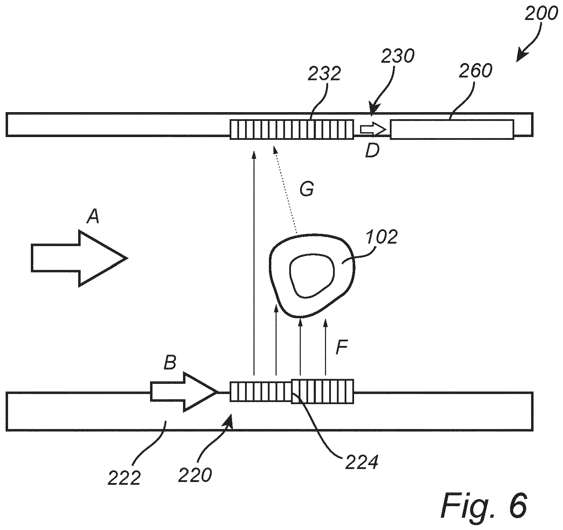

According to an alternative, as illustrated in Fig. 6, the filter 260 may be provided as a fluorescence filter arranged in the light collecting waveguide 230. The filter 260 may thus be integrated in the light collecting waveguide 230 and may be arranged in a location displaced from the light inlet 232 along the extension of the waveguide. The filter 260 may for instance be configured to absorb the illumination light such that the filter 260 will pass fluorescence light while completely or partially blocking illumination light from being transported by the light collecting waveguide 230. As an alternative, the filter 260 may be configured to re-direct the illumination light into a different path from the fluorescence light such that illumination light and fluorescence light are separated.

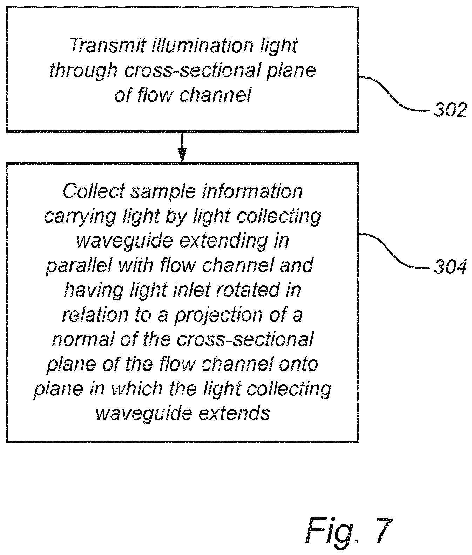

Referring now to Fig. 7, a method for light illumination and collection for a micro-fluidic system will be described.

The method comprises transmitting 302 illumination light along an optical axis extending through a cross-sectional plane of a flow channel. The illumination light is transmitted for causing light interaction between the illumination light and a sample flowing in the flow channel to form sample information carrying light.

The illumination light may for instance be adapted for causing scattering of light and/or for causing emission of fluorescence light by the sample. The light interaction provides information of the sample, such as size and/or morphology of particles and/or droplets in the sample.

The method further comprises collecting 304 the sample information carrying light by a light collecting waveguide extending in parallel to the flow channel. The light collecting waveguide comprises a light inlet configured to receive the sample information carrying light, wherein the light inlet and the light collecting waveguide are rotated in relation to a projection of a normal of the cross-sectional plane of the flow channel onto the second plane.

Thanks to the light inlet being rotated in relation to the projection of the normal of the cross-sectional plane of the flow channel onto the second plane, the sample information carrying light may be collected with a high signal-to-noise ratio, avoiding or at least reducing background noise based on illumination light that has not interacted with the sample.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1. A light illumination and collection device (100; 200) for a micro-fluidic system, said light illumination and collection device (100; 200) comprising:

   a flow channel (110; 210) configured to extend in a first plane and allow flow of a sample through the flow channel (110; 210),
   a light source (120; 220) configured to transmit illumination light along an optical axis extending through a cross-sectional plane of the flow channel (110; 210) for causing light interaction between the illumination light and the sample to form sample information carrying light;
   a light collecting waveguide (130; 230) configured to extend in a second plane parallel to the first plane, wherein the light collecting waveguide comprises a light inlet (132; 232), wherein the light inlet (132; 232) is configured to receive the sample information carrying light, wherein the light inlet (132; 232) and the light collecting waveguide (130; 232) are rotated in relation to a projection of a normal of the cross-sectional plane of the flow channel (110; 210) onto the second plane.

2. The light illumination and collection device according to claim 1, wherein the light source (120) is configured to transmit illumination light causing scattering of light by the sample for forming scattered light carrying sample information.

3. The light illumination and collection device according to claim 2, wherein the light inlet (132) is arranged in relation to the cross-sectional plane of the flow channel (110) for collecting side-scattered light being scattered out of the cross-sectional plane of the flow channel (110), wherein the light collecting waveguide (130) forms a side-scattered light collecting waveguide (130).

4. The light illumination and collection device according to claim 3, further comprising a forward-scattered light collecting waveguide (140), wherein the forward-scattered light collecting waveguide (140) comprises a light inlet (142), wherein the light inlet (142) is configured to receive forward-scattered light being scattered in a direction in relation to the optical axis being smaller than 10°.

5. The light illumination and collection device according to claim 4, wherein the forward-scattered light collecting waveguide (140) is configured to extend in the second plane and wherein the forward-scattered light collecting waveguide (140) is rotated in relation to the side-scattered light collecting waveguide (130).

6. The light illumination and collection device according to claim 1, wherein the light source (220) is configured to transmit illumination light causing fluorescence by the sample for forming fluorescence light carrying sample information.

7. The light illumination and collection device according to claim 6, further comprising a filter (250) configured to block the illumination light from being collected by the light collecting waveguide (230).

8. The light illumination and collection device according to any one of the preceding claims, wherein the light collecting waveguide (130) forms part of a plurality of light collecting waveguides (130a-i), wherein the light collecting waveguides in the plurality of light collecting waveguides (130a-i) extend in parallel to each other.

9. The light illumination and collection device according to claim 8, further comprising a plurality of light detectors, wherein each of the light collecting waveguides is connected to a separate light detector of the plurality of light detectors for detecting light interaction from different positions in the cross-sectional plane of the flow channel.

10. The light illumination and collection device according to any one of the preceding claims, wherein the light inlet (132; 232) of the light collecting waveguide is formed by a grating.

11. The light illumination and collection device according to any one of the preceding claims, wherein the light source (120; 220) comprises an illumination light propagating waveguide (122; 222) configured to extend in a third plane parallel to the first and second planes, wherein the illumination light propagation waveguide (122; 222) and the light collecting waveguide (130; 230) are arranged at opposite sides of the flow channel (110; 210), wherein the illumination light propagating waveguide (122; 222) comprises an illumination grating (124; 224) configured to direct light propagating in the illumination light propagating waveguide (122; 222) out of the illumination light propagating waveguide (122; 222) and into the flow channel (110; 210).

12. The light illumination and collection device according to any one of the preceding claims, wherein the light inlet (132; 232) and the light collecting waveguide (130; 230) forms an angle in relation to the projection of the normal of the cross-sectional plane of the flow channel (110; 210) onto the second plane, wherein the angle is in a range of 20-90°, such as in a range of 20-70°, such as in a range of 30-60°, such as in a range of 40-50°.

13. A flow cytometer comprising at least one, preferably at least eight, light illumination and collection device according to any one of the preceding claims.

14. A method for light illumination and collection for a micro-fluidic system, said method comprising:

transmitting (302) illumination light along an optical axis extending through a cross-sectional plane of a flow channel for causing light interaction between the illumination light and a sample flowing in the flow channel to form sample information carrying light;
collecting (304) the sample information carrying light by a light collecting waveguide extending in parallel to the flow channel, wherein the light collecting waveguide comprises a light inlet configured to receive the sample information carrying light, wherein the light inlet and the light collecting waveguide are rotated in relation to a projection of a normal of the cross-sectional plane of the flow channel onto the second plane.

*Fig. 1*

Fig. 2

Fig. 3

Fig. 4

Fig. 5

*Fig. 6*

Transmit illumination light
through cross-sectional plane
of flow channel

302

Collect sample information
carrying light by light collecting
waveguide extending in
parallel with flow channel and
having light inlet rotated in
relation to a projection of a
normal of the cross-sectional
plane of the flow channel onto
plane in which the light collecting
waveguide extends

304

*Fig. 7*

Europäisches
Patentamt

European
Patent Office

Office européen
des brevets

# EUROPEAN SEARCH REPORT

**Application Number**

EP 24 17 3001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2022/178812 A1 (VERELLEN NIELS [BE] ET AL) 9 June 2022 (2022-06-09)<br>* paragraphs [0008], [0013], [0014], [0021], [0032], [0033], [0035], [0037], [0052] - [0055], [0069], [0094], [0096], [0097], [0100]; figures 1-5 * | 1-11,13,<br>14<br>12 | INV.<br>G01N15/1434<br>G01N15/14<br>G01N15/0205<br><br>ADD.<br>G01N15/10 |

-----

**TECHNICAL FIELDS SEARCHED       (IPC)**

G01N

The present search report has been drawn up for all claims

| Place of search | Date of completion of the search | Examiner |
|---|---|---|
| The Hague | 4 October 2024 | Geromel Prette, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 17 3001

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2024

| Patent document cited in search report | Publication date | Patent family member(s) | | Publication date |
|---|---|---|---|---|
| US 2022178812 A1 | 09-06-2022 | EP | 4012380 A1 | 15-06-2022 |
| | | US | 2022178812 A1 | 09-06-2022 |

EPO FORM P0459